# EUROPÄISCHE PATENTSCHRIFT

(11) **EP 2 505 884 B1**
(45) Veröffentlichungstag und Bekanntmachung des Hinweises auf die Patenterteilung: **30.10.2013**
(21) Anmeldenummer: 12001657.1
(22) Anmeldetag: 08.03.2012
(51) Int. Cl.: F16K 15/06, B67D 1/07

(54) **Rückschlagventil für pumpfähige Tiernahrung**
Non-return valve for pumpable animal feed
Clapet anti-retour pour alimentation pour animaux pompable

(30) Priorität: 28.03.2011 DE 102011015352
(43) Veröffentlichungstag der Anmeldung: 03.10.2012
(73) Patentinhaber: Holm, Hans Joachim, 24784 Westerrönfeld (DE); Laue, Hans-Joachim, 24783 Osterrönfeld (DE)
(72) Erfinder: Holm, Hans Joachim, 24784 Westerrönfeld (DE); Laue, Hans-Joachim, 24783 Osterrönfeld (DE)
(74) Vertreter: Hauck Patent- und Rechtsanwälte

(56) Entgegenhaltungen:
- EP-A1- 1 411 284
- EP-A2- 2 072 871
- DE-U1-202009 001 542
- US-A1- 2005 098 753
- US-B1- 7 237 760

## Beschreibung

Die Erfindung betrifft ein Rückschlagventil für pumpfähige Tiernahrung mit einem Ventilkörper, der eine Eingangsöffnung, eine Ausgangsöffnung und einen Ventilsitz aufweist, einem Ventilglied, das eine Ventilfläche und einen Ventilschaft aufweist, der in einer Längsrichtung verschieblich geführt ist, und einer Feder, die das Ventilglied mit einer Federkraft in eine Geschlossenstellung beaufschlagt, in der die Ventilfläche an dem Ventilsitz anliegt, wobei das Ventilglied von durch das Rückschlagventil zu pumpender Tiernahrung gegen die Federkraft in eine erste Offenstellung verlagerbar ist, in der sich die Ventilfläche in einem ersten Abstand von dem Ventilsitz befindet.

Derartige Rückschlagventile finden Verwendung zum Beispiel in dem fahrbaren Milchbehälter für die Nutztieraufzucht, der in der Druckschrift DE 20 2009 001 542 U1 beschrieben ist. Mit diesem fahrbaren Milchbehälter kann pumpfähige Tiernahrung insbesondere in Form von Milch einfach auf eine Vielzahl von Tränken oder Trinkflaschen beispielsweise für Kälber verteilt werden, wobei die Milch mit einer einfach handhabbaren Zapfpistole abgefüllt wird. Am vorderen Ende der Zapfpistole befindet sich ein gattungsgemäßes Rückschlagventil, das ein Zurückströmen von bereits in einem Abfüllschlauch befindlicher Milch in den Milchbehälter verhindert. Dies ist einerseits für einen reibungslosen Abfüllvorgang günstig, weil verhindert wird, dass sich der Schlauch nach einem ersten Abfüllvorgang mit Luft füllt. Andererseits ist es auch hygienisch vorteilhaft, weil verhindert wird, dass Verunreinigungen in den Milchbehälter gelangen.

Bei den bekannten Rückschlagventilen sorgt eine Feder dafür, dass das Ventilglied bei Abwesenheit eines Pumpendrucks automatisch in seine Geschlossenstellung gelangt und das Ventil schließt. Soll pumpfähige Tiernahrung abgegeben werden, baut eine Fördereinrichtung, insbesondere eine Pumpe, an der Eingangsöffnung des Ventilkörpers einen Druck auf, der das Ventilglied gegen die Federkraft in eine Offenstellung verlagert.

Davon ausgehend ist es die Aufgabe der Erfindung, ein Rückschlagventil für pumpfähige Tiernahrung zur Verfügung zu stellen, das besonders einfach gereinigt werden kann und die Handhabung einer Abfülleinrichtung für pumpfähige Tiernahrung vereinfacht.

Diese Aufgabe wird gelöst durch das Rückschlagventil für pumpfähige Tiernahrung mit den Merkmalen des Anspruchs 1. Vorteilhafte Ausgestaltungen sind in den sich anschließenden Unteransprüchen angegeben.

Das erfindungsgemäße Rückschlagventil für pumpfähige Tiernahrung hat
- einen Ventilkörper, der eine Eingangsöffnung, eine Ausgangsöffnung und einen Ventilsitz aufweist,
- ein Ventilglied, das eine Ventilfläche und einen Ventilschaft aufweist, der in einer Längsrichtung verschieblich geführt ist, und
- eine Feder, die das Ventilglied mit einer Federkraft in eine Geschlossenstellung beaufschlagt, in der die Ventilfläche an dem Ventilsitz anliegt,
- wobei das Ventilglied von durch das Rückschlagventil zu pumpender Tiernahrung gegen die Federkraft in eine erste Offenstellung verlagerbar ist, in der sich die Ventilfläche in einem ersten Abstand von dem Ventilsitz befindet,
- am Ventilglied ein Anschlag ausgebildet ist, der sich in einer zweiten Offenstellung des Ventilglieds an einem Anschlag des Ventilkörpers abstützt, und
- der Ventilschaft durch die Ausgangsöffnung des Ventilkörpers hindurch nach außen ragt und dort einen Griffabschnitt aufweist, an dem der Ventilschaft ergriffen werden kann, um das Ventilglied in die zweite Offenstellung zu bringen.

Die Erfindung beruht auf der Beobachtung, dass das Reinigen der eingangs beschriebenen, herkömmlichen Rückschlagventile für pumpfähige Tiernahrung aufwendig ist. Insbesondere kann eine Reinigungsflüssigkeit wegen des selbsttätigen Schließens des Rückschlagventils stets nur in der Durchflussrichtung des Rückschlagventils gefördert werden. Anschließend verbleibt die Reinigungsflüssigkeit in einer Zuleitung, insbesondere einem Schlauch einer mit dem Rückschlagventil ausgestatteten Abgabevorrichtung. Aus dieser Zuleitung kann die Reinigungsflüssigkeit nicht ohne weiteres entfernt werden, da ein Rücklauf der Reinigungsflüssigkeit durch das Rückschlagventil verhindert wird und ein restloses Entleeren in Förderrichtung nicht möglich ist. Darum muss nach dem Einfüllen der pumpfähigen Tiernahrung in einen mit der Zuleitung verbundenen Vorratsbehälter zunächst die in der Zuleitung befindliche Reinigungsflüssigkeit abgegeben werden. Dabei wird in der Regel ein Teil der Tiernahrung, der sich mit der Reinigungsflüssigkeit vermischt hat, verworfen. Erst danach kann mit dem Verteilen der Tiernahrung begonnen werden. Dies ist umständlich und bereitet insbesondere bei geringen Umgebungstemperaturen Probleme, wenn in der Zuleitung verbliebene Reinigungsflüssigkeit schnell einfrieren kann. Außerdem ist bei den bekannten Ventilen ein Spülen in der Förderrichtung entgegen gesetzter Richtung nicht möglich. Für eine gründliche Reinigung kann es daher erforderlich sein, die bekannten Rückschlagventile zu öffnen, was aufwendig ist.

Bei der Erfindung sind am Ventilglied und Ventilkörper zusammenwirkende Anschläge ausgebildet, mit deren Hilfe das Ventilglied in einer zweiten Offenstellung fixiert werden kann. In dieser zweiten Offenstellung stützt sich ein am Ventilglied ausgebildeter Anschlag an einem Anschlag des Ventilkörpers ab. Die zusammenwirkenden Anschläge verhindern unabhängig von den Druckverhältnissen an der Ein- und Ausgangsöffnung und einer Durchflussrichtung, dass das Ventilglied in die Geschlossenstellung gelangt. Außerdem ragt der Ventilschaft durch die Ausgangsöffnung des Ventilkörpers hindurch nach außen und weist dort einen Griffabschnitt auf. An diesem Griffabschnitt kann der Ventilschaft mit der Hand ergriffen werden und das Ventilglied kann auf diese Weise sehr einfach in die zweite Offenstellung verlagert werden. Hierzu kann insbesondere am Griffabschnitt gezogen und dadurch das Ventilglied gegen die Federkraft so verlagert werden, dass die genannte Abstützwirkung der beiden zusammenwirkenden Anschläge eintritt. Das Ventilglied befindet sich dann in der zweiten Offenstellung und verbleibt in dieser, auch wenn der Griffabschnitt wieder losgelassen wird. In einer Zuleitung verbliebene Reinigungsflüssigkeit kann dann einfach entgegen der Förderrichtung beim Abgeben der Tiernahrung abgelassen werden. Sie strömt dann automatisch zu einem tiefsten Punkt, insbesondere eines mit der Zuleitung verbundenen Vorratsbehälters, von wo aus sie einfach abgelassen werden kann, zum Beispiel mit Hilfe eines Ablasshahns. Außerdem kann das Rückschlagventil besonders einfach und gründlich gereinigt werden, insbesondere durch Spülen des Ventils mit einer Reinigungsflüssigkeit entgegen der Strömungsrichtung beim Abgeben der pumpfähigen Tiernahrung.

Dass der Ventilschaft durch die Ausgangsöffnung des Ventilkörpers hindurch nach außen ragt, bedeutet, dass sich ein Teil des Ventilschafts, an dem der Griffabschnitt ausgebildet ist, außerhalb des Ventilkörpers befindet, sodass er einfach mit den Fingern ergriffen werden kann. Bei der Benutzung des Rückschlagventils bildet zweckmäßigerweise die Ausgangsöffnung die Abgabeöffnung für die Tiernahrung. An die Ausgangsöffnung müssen keine weiteren Elemente der Abfülleinrichtung angeschlossen werden und das Rückschlagventil bildet in diesem Sinne das vordere Ende einer Abgabevorrichtung.

In einer Ausgestaltung befindet sich die Ventilfläche in der zweiten Offenstellung in einem zweiten Abstand von dem Ventilsitz, der größer ist als der erste Abstand. Die Anordnung der beiden zusammenwirkenden Anschläge kann so auf den vorgesehenen Einsatzzweck des Rückschlagventils abgestimmt sein, dass das Ventilglied durch den Druck der zu pumpenden Tiernahrung allein nicht in die zweite Offenstellung gelangen kann. Vielmehr wird es nur bis zu einer ersten Offenstellung hin verlagert, in der die Federkraft und die von dem strömenden Medium ausgeübten Kräfte sich im Gleichgewicht befinden. Erst durch Manipulation des Ventilglieds am Griffabschnitt wird unter Überwindung einer zusätzlichen Federkraft die zweite Offenstellung erreicht. Dadurch wird sichergestellt, dass das Rückschlagventil im Abfüllbetrieb stets zuverlässig in seine Geschlossenstellung gelangt, wenn ein Abgabevorgang beendet ist und ein für das Öffnen des Ventils erforderlicher minimaler Druck an der Eingangsöffnung unterschritten wird, insbesondere durch Abschalten einer Förderpumpe. Mit anderen Worten wird zuverlässig verhindert, dass das Rückschlagventil unbeabsichtigt in die zweite Offenstellung gelangt.

Grundsätzlich kann das Zusammenwirken des am Ventilglied ausgebildeten Anschlags mit dem am Ventilkörper ausgebildeten Anschlag auf beliebige Art und Weise erreicht werden. Beispielsweise kann das Ventilglied gegenüber dem Ventilkörper gedreht werden, sodass ein Vorsprung am Ventilglied einen Anschlag am Ventilkörper hintergreift oder umgekehrt, etwa wie bei einem Bajonettverschluss. In einer Ausgestaltung ist eine Längsachse des Ventilschafts in der zweiten Offenstellung gegenüber ihrer Orientierung in der Geschlossenstellung geneigt angeordnet. Das Zusammenwirken der Anschläge wird also durch ein Verkippen des Ventilglieds gegenüber dem Ventilkörper erreicht. Der hierzu erforderliche Bedienvorgang am Griffabschnitt des Ventilglieds ist besonders einfach auszuführen. Es genügt, den Griffabschnitt zunächst ein Stück aus dem Ventilkörper herauszuziehen und ihn gegenüber der Längsachse des Ventilkörpers durch eine kleine seitliche Bewegung am Griffabschnitt zu verkippen. Ebenso einfach lässt sich das Ventilglied wieder in seine Geschlossenstellung bringen. Hierzu genügt es, den Griffabschnitt in Richtung zur Längsachse des Ventilkörpers hin zu bewegen. Anschließend gelangt das Ventilglied aufgrund der Federkraft automatisch in seine Geschlossenstellung. In der Geschlossenstellung kann die Längsachse des Ventilschafts mit einer Längsachse des Ventilkörpers zusammenfallen. Das Ventilglied kann insbesondere entlang dieser Längsachse verschieblich sein. Das Ventilglied, insbesondere der Ventilschaft, und Führungselemente am Ventilkörper können so ausgebildet sein, dass das Verkippen des Ventilschafts gegenüber der Längsachse des Ventilkörpers erst nach einem Verlagern des Ventilglieds entlang der Längsrichtung möglich ist, wenn sich die Ventilfläche mindestens in einem zweiten Abstand von dem Ventilsitz befindet.

In einer Ausgestaltung ist die Ventilfläche an einem Ventilteller ausgebildet. Grundsätzlich können Ventilfläche und Ventilsitz auch eine beliebige andere, aufeinander abgestimmte Geometrie aufweisen, etwa wie bei einem Kugel- oder Nadelventil. Eine Ausgestaltung als Tellerventil ist jedoch besonders einfach und für den vorgesehenen Verwendungszweck gut geeignet.

In einer Ausgestaltung weist der Ventilteller einen Dichtring auf. Der Dichtring kann aus einem elastischen Material, beispielsweise aus Gummi, bestehen. Er kann in Radial- oder Axialrichtung in eine ringförmige Nut des Ventiltellers eingesetzt sein. Er sorgt für ein zuverlässiges Abdichten in der Geschlossenstellung auch bei relativ geringen Federkräften. Außerdem kann der Dichtring Fertigungstoleranzen ausgleichen.

In einer Ausgestaltung weist der Ventilschaft einen ersten Abschnitt auf, der in einer ersten Führungsöffnung des Ventilkörpers geführt ist und sich durch die Ausgangsöffnung hindurch erstreckt, und einen zweiten Abschnitt, der auf einer dem ersten Abschnitt des Ventilschafts gegenüberliegenden Seite der Ventilfläche angeordnet ist und der in einer zweiten Führungsöffnung des Ventilkörpers geführt ist. Der erste Abschnitt und der zweite Abschnitt des Ventilschafts können sich entlang der Längsachse des Ventilschafts erstrecken. Auf beiden Seiten der Ventilfläche befindet sich eine Führungsöffnung im Ventilkörper, in dem der Ventilschaft geführt ist. Die erste Führungsöffnung und/oder die zweite Führungsöffnung im Ventilkörper können konzentrisch zu einer Durchflussöffnung des Ventilkörpers angeordnet sein. Sie können beispielsweise jeweils in einem ringförmigen Abschnitt ausgebildet sein, der über zwei oder mehr Stege innerhalb einer Durchflussöffnung des Ventilkörpers fixiert ist.

In einer Ausgestaltung weist der erste Abschnitt des Ventilschafts einen geringeren Durchmesser auf als die erste Führungsöffnung, sodass er in die zweite Offenstellung verkippt werden kann. Mit anderen Worten ist der erste Abschnitt des Ventilschafts mit relativ großem Spiel in der ersten Führungsöffnung geführt und verhindert nicht ein Verkippen des Ventilschafts um ein gewisses Maß, wie in der zweiten Offenstellung. In der zweiten Offenstellung kann der zweite Abschnitt des Ventilschafts aus der zweiten Führungsöffnung des Ventilkörpers herausgezogen sein, sodass die von der zweiten Führungsöffnung bewirkte seitliche Führung nicht mehr oder nur noch eingeschränkt wirksam wird. Auch dies führt dazu, dass das Ventilglied nach dem teilweisen Herausziehen aus dem Ventilkörper am Griffabschnitt in der geschilderten Weise in die zweite Offenstellung verkippt werden kann.

In einer Ausgestaltung ist der Anschlag des Ventilglieds am zweiten Abschnitt des Ventilschafts ausgebildet und der Anschlag des Ventilkörpers an der zweiten Führungsöffnung. Grundsätzlich können die beiden genannten Anschläge auch im Bereich des ersten Abschnitts des Ventilschafts und der ersten Führungsöffnung oder an einer sonstigen Position von Ventilglied bzw. Ventilkörper ausgebildet sein. Bei Ausbildung der Anschläge am zweiten Abschnitt und an der zweiten Führungsöffnung wird insbesondere in Verbindung mit einer auf der gegenüberliegenden Seite der Ventilfläche angeordneten Feder ein besonders zuverlässiges Einrasten oder Einhaken des Ventilglieds in der zweiten Offenstellung erreicht.

In einer Ausgestaltung ist der Anschlag des Ventilglieds eine Stufe im Durchmesser des Ventilschafts. Insbesondere kann sich der Durchmesser des Ventilschafts im Bereich des zweiten Abschnitts des Ventilschafts stufenförmig verringern. Ein freies Ende des zweiten Abschnitts kann ein gegenüber dem übrigen Durchmesser des zweiten Abschnitts gleichmäßig verringerten Durchmesser aufweisen. Die Verwendung einer solchen Stufe als Anschlag ist besonders vorteilhaft, weil das Ventilglied seitlich in beliebiger radialer Richtung in die zweite Offenstellung verkippt werden kann.

In einer Ausgestaltung weist der Griffabschnitt eine Riffelung auf. Die Riffelung kann beispielsweise ringförmig umlaufende Vertiefungen aufweisen und vereinfacht das Ergreifen des Griffabschnitts.

In einer Ausgestaltung richtet sich die Erfindung auf eine Zapfpistole mit einem Rückschlagventil gemäß einer der vorstehend erläuterten Ausgestaltungen. Die so ausgebildete Zapfpistole kann beispielsweise für einen fahrbaren Milchbehälter der eingangs beschriebenen Art verwendet werden.

In einer weiteren Ausgestaltung richtet sich die Erfindung auf einen Milchwagen mit einer Dosiereinrichtung und einer Einrichtung zum Abgeben der Milch, die ein Rückschlagventil in einer der vorstehend erläuterten Ausgestaltungen aufweist. Bei einem solchen Milchwagen kann insbesondere die Eingangsöffnung des Rückschlagventils über einen Schlauch oder eine Rohrleitung mit einer Dosiereinrichtung verbunden sein.

Die Erfindung wird nachfolgend anhand eines in vier Figuren dargestellten Ausführungsbeispiels näher erläutert. Es zeigen:
- Fig. 1: ein erfindungsgemäßes Rückschlagventil in einer Draufsicht von der Seite in der Geschlossenstellung,
- Fig. 2: eine Draufsicht auf das Rückschlagventil aus Fig. 1 in der zweiten Offenstellung mit gegenüber Fig. 1 um 90° versetzter Blickrichtung,
- Fig. 3: einen Längsschnitt durch die in der Figur 2 mit A-A bezeichnete Schnittebene,
- Fig. 4: eine perspektivische Ansicht des entlang derselben Schnittebene aufgeschnittenen Rückschlagventils aus den Figuren 1 bis 3.

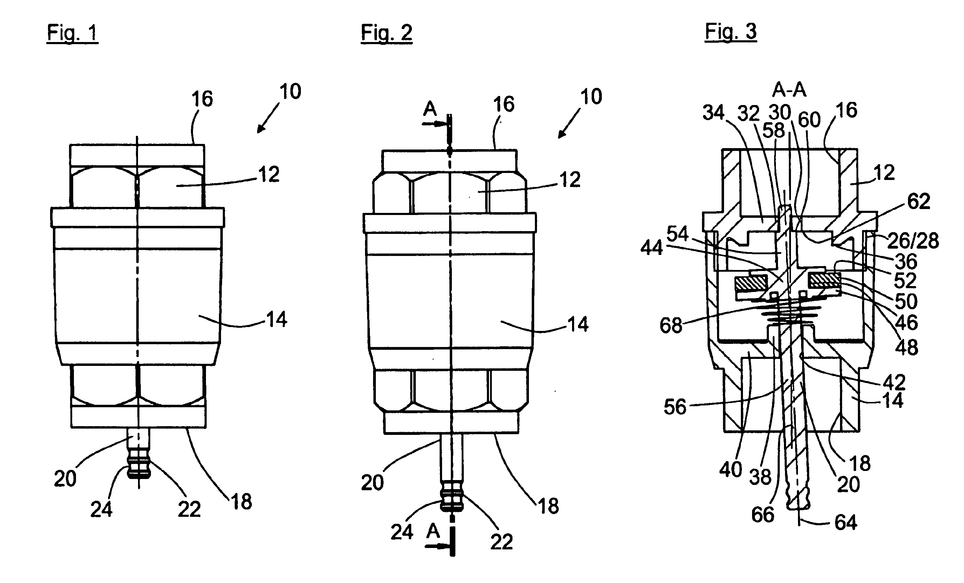

Figur 1 zeigt ein Rückschlagventil mit einem Ventilkörper 10, der aus einem eingangsseitigen Ventilkörperabschnitt 12 und einem ausgangsseitigen Ventilkörperabschnitt 14 zusammengesetzt ist. Die beiden Abschnitte 12, 14 sind miteinander verschraubt und weisen zu diesem Zweck jeweils einen sechskantigen Abschnitt auf. Am eingangsseitigen Ventilkörperabschnitt 12 ist eine Eingangsöffnung 16 angeordnet und am ausgangsseitigen Ventilkörperabschnitt 14 eine Ausgangsöffnung 18. Der gesamte Ventilkörper 10 hat mit Ausnahme der sechskantigen Abschnitte einen im Wesentlichen kreisförmigen Querschnitt.

Im Inneren des Ventilkörpers 10 befindet sich ein Ventilglied, das mit einem Ventilschaft 20 durch die Ausgangsöffnung 18 hindurch nach außen ragt. Das in der Figur 1 sichtbare, außerhalb des Ventilkörpers 10 angeordnete Ende des Ventilschafts 20 weist einen Griffabschnitt 22 auf, der mit einer Riffelung 24 in Form von zwei kreisförmig umlaufenden Nuten versehen ist.

Figur 2 unterscheidet sich von der Figur 1 durch den Betrachtungswinkel, weshalb von den sechskantigen Abschnitten des eingangsseitigen Ventilkörperabschnitts 12 und des ausgangsseitigen Ventilkörperabschnitts 14 nunmehr jeweils drei Flächen sichtbar sind. Außerdem befindet sich das Ventilglied nicht wie in Figur 1 in der Geschlossenstellung, sondern in einer zweiten Offenstellung, in der der Ventilschaft 20 mit dem Griffabschnitt 22 weiter aus dem ausgangsseitigen Ventilkörperabschnitt 14 herausragt.

Weitere Einzelheiten des erfindungsgemäßen Rückschlagventils sind am besten in Figur 3 zu erkennen, die einen Längsschnitt durch die in Figur 2 mit A-A bezeichnete Ebene zeigt. Man erkennt, dass der eingangsseitige Ventilkörperabschnitt 12 ein Außengewinde 26 aufweist, das in ein Innengewinde 28 am ausgangsseitigen Ventilkörperabschnitt 14 eingeschraubt ist. Weiterhin weist der eingangsseitige Ventilkörperabschnitt 12 eine Eingangsöffnung 16 auf, die mit zylindrischem Querschnitt in den eingangsseitigen Ventilkörperabschnitt 12 hineinführt.

Der in der Figur 3 dargestellte ausgangsseitige Ventilkörperabschnitt 14 weist eine Ausgangsöffnung 18 auf, die mit zylindrischem Querschnitt in den ausgangsseitigen Ventilkörperabschnitt 14 hineinführt. Im Inneren des ausgangsseitigen Ventilkörperabschnitts 14 ist ein erster ringförmiger Abschnitt 38 angeordnet, der über zwei Stege 40 mit einer zylindrischen Wandung des ausgangsseitigen Ventilkörperabschnitts 14 verbunden ist.

Der erste ringförmige Abschnitt 38 ist konzentrisch zu dem ausgangsseitigen Ventilkörperabschnitt 14 angeordnet und weist eine erste Führungsöffnung 42 mit kreisförmigem Querschnitt auf.

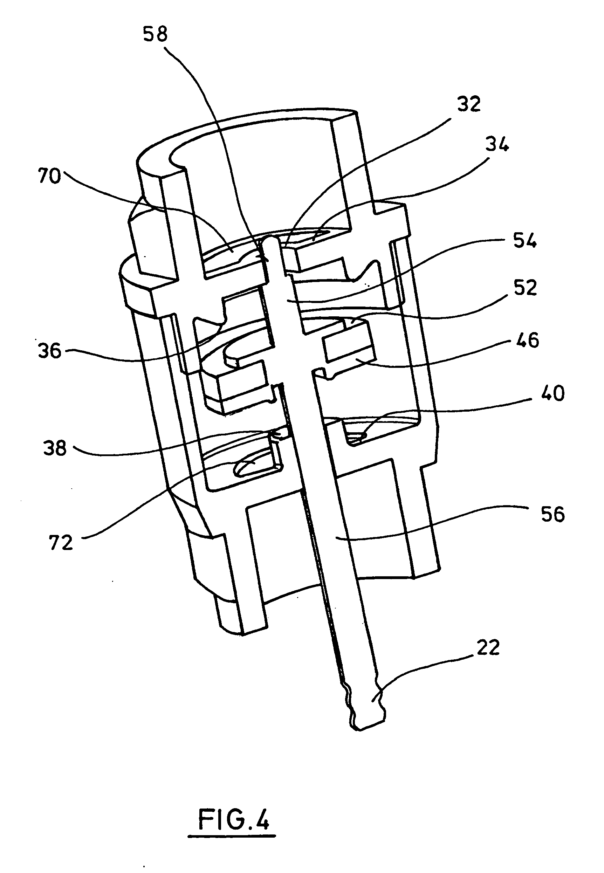

In einem Abstand vom in der Figur 3 oben gezeigten, eingangsseitigen Ende des eingangsseitigen Ventilkörperabschnitts 12 befindet sich in dessen Innerem eine zweite Führungsöffnung 30, die konzentrisch zur Eingangsöffnung 16 angeordnet ist. Diese zweite Führungsöffnung 30 hat einen kreisförmigen Querschnitt und ist in einem zweiten ringförmigem Abschnitt 32 (siehe auch Figur 4) ausgebildet, der über zwei Stege 34 mit einer zylindrischen Wandung des eingangsseitigen Ventilkörperabschnitts 12 verbunden ist.

In der Figur 3 unterhalb der Stege 34, etwa auf Höhe des mit dem Außengewinde 26 versehenen Abschnitts des eingangsseitigen Ventilkörperabschnitts 12, befindet sich ein Ventilsitz 36, der eine ringförmige Kontaktfläche aufweist.

Ebenfalls gut in der Figur 3 zu erkennen ist das Ventilglied 44, das einen Ventilteller 46 und einen Ventilschaft 20 aufweist. Der Ventilteller 46 weist eine umlaufende Nut 48 auf, in die ein Dichtring 50 in radialer Richtung eingesetzt ist. Die in der Figur 3 oben dargestellte Seite des Dichtrings 50 bildet eine Ventilfläche 52, die mit dem Ventilsitz 36 zusammenwirkt und in einer nicht dargestellten Geschlossenstellung des Ventils dichtend am Ventilsitz 36 anliegt.

Der Ventilschaft 20 erstreckt sich durch den Ventilteller 46 hindurch und weist in der Figur 3 unterhalb des Ventiltellers 46 einen ersten Abschnitt 56 und oberhalb der Ventilfläche 52 einen zweiten Abschnitt 54 auf. Der zweite Abschnitt 54 des Ventilschafts 20 weist denselben Durchmesser auf wie der erste Abschnitt 56 des Ventilschafts 20, mit Ausnahme eines in der Figur 3 oben dargestellten, freien Endes 58, das einen geringeren Durchmesser aufweist. Zwischen diesem freien Ende 58 mit geringerem Durchmesser und dem zweiten Abschnitt 54 des Ventilschafts 20 ist eine Stufe ausgebildet, die einen Anschlag 60 des Ventilglieds 44 bildet. Der untere Rand der zweiten Führungsöffnung 30 bildet einen Anschlag 62 am Ventilkörper 10, der mit dem Anschlag 60 des Ventilglieds 44 zusammenwirkt.

Der Durchmesser des zweiten Abschnitts 54 des Ventilschafts 20 ist etwas kleiner als der Durchmesser der zweiten Führungsöffnung 30, sodass das Ventilglied 44 nach Ausrichtung seiner Längsachse 64 parallel zur Symmetrieachse 66 des Ventilkörpers 10 nach oben bewegt werden kann. Hierzu kann das Ventilglied 44 durch Manipulation am Griffabschnitt 22 in Richtung zu der Symmetrieachse 66 hin bewegt werden, sodass der Anschlag 60 am Ventilglied 44 von dem Anschlag 62 entfernt wird und der zweite Abschnitt 54 des Ventilschafts 20 in die erste Führungsöffnung 30 gleiten und das Ventilglied 44 in seine Geschlossenstellung gebracht werden kann.

Der Durchmesser der ersten Führungsöffnung 42 ist etwas größer als der Durchmesser des zweiten Abschnitts 56 des Ventilschafts 20, sodass das Ventilglied 44 wie in der Figur 3 dargestellt mit seiner Längsachse 64 gegenüber der Symmetrieachse 66 des Ventilkörpers 10 gekippt angeordnet werden kann. Es befindet sich dann in seiner zweiten Offenstellung, in der der Anschlag 60 am Ventilglied mit dem Anschlag 62, gebildet vom unteren Rand der zweiten Führungsöffnung 30, zusammenwirkt, um das Ventilglied 44 in der zweiten Offenstellung zu halten.

Zwischen einer Unterseite des Ventiltellers 46 und einem oberen Ende des ersten ringförmigen Abschnitts 38 ist eine Feder 68 angeordnet, die das Ventilglied 44 mit einer Kraft in Richtung zur Geschlossenstellung hin beaufschlagt.

In der Figur nicht dargestellt ist die erste Offenstellung des Rückschlagventils, in der die Längsachse 64 des Ventilglieds 44 mit der Symmetrieachse 66 des Ventilkörpers 10 ausgerichtet ist und das Ventilglied 44 höher angeordnet ist, als in der Figur 3 gezeigt, d.h. mit einem geringeren Abstand zwischen der Ventilfläche 52 und dem Ventilsitz 36. In dieser ersten Offenstellung befindet sich der zweite Abschnitt 54 des Ventilschafts 20 in der zweiten Führungsöffnung 30 und wird von dieser geführt, sodass das Ventilglied 44 im Wesentlichen nur in seiner Längsrichtung verlagerbar ist.

In der Figur 4 sind die gleichen Elemente gezeigt wie in der Figur 3. In der perspektivischen Ansicht erkennt man besonders gut, dass der erste ringförmige Abschnitt 32 und der zweite ringförmige Abschnitt 38 über jeweils zwei Stege 34 bzw. 40 gehalten werden, während seitlich dieser Stege 34, 40 halbringförmige Öffnungen 70, 72 angeordnet sind, durch die die pumpfähige Tiernahrung strömen kann. Die übrigen in der Figur 4 erkennbaren Elemente sind mit den gleichen Bezugszeichen bezeichnet wie in der Figur 3 und werden nicht noch einmal erläutert.

## Patentansprüche

1. Rückschlagventil für pumpfähige Tiernahrung mit
• einem Ventilkörper (10), der eine Eingangsöffnung (16), eine Ausgangsöffnung (18) und einen Ventilsitz (36) aufweist,
• einem Ventilglied (44), das eine Ventilfläche (52) und einen Ventilschaft (20) aufweist, der in einer Längsrichtung verschieblich geführt ist, und
• einer Feder (68), die das Ventilglied (44) mit einer Federkraft in eine Geschlossenstellung beaufschlagt, in der die Ventilfläche (52) an dem Ventilsitz (36) anliegt,
• wobei das Ventilglied (44) von durch das Rückschlagventil zu pumpender Tiernahrung gegen die Federkraft in eine erste Offenstellung verlagerbar ist, in der sich die Ventilfläche (52) in einem ersten Abstand von dem Ventilsitz (36) befindet, **dadurch gekennzeichnet, dass**
• am Ventilglied (44) ein Anschlag (60) ausgebildet ist, der sich in einer zweiten Offenstellung des Ventilglieds (44) an einem Anschlag (62) des Ventilkörpers (10) abstützt, und
• der Ventilschaft (20) durch die Ausgangsöffnung (18) des Ventilkörpers (10) hindurch nach außen ragt und dort einen Griffabschnitt (22) aufweist, an dem der Ventilschaft (20) ergriffen werden kann, um das Ventilglied (44) in die zweite Offenstellung zu bringen.

2. Rückschlagventil nach Anspruch 1, **dadurch gekennzeichnet, dass** sich die Ventilfläche (52) in der zweiten Offenstellung in einem zweiten Abstand von dem Ventilsitz (36) befindet, der größer ist als der erste Abstand.

3. Rückschlagventil nach Anspruch 1 oder 2, **dadurch gekennzeichnet, dass** eine Längsachse (64) des Ventilschafts (20) in der zweiten Offenstellung gegenüber ihrer Orientierung in der Geschlossenstellung geneigt angeordnet ist.

4. Rückschlagventil nach einem der Ansprüche 1 bis 3, **dadurch gekennzeichnet, dass** die Ventilfläche (52) an einem Ventilteller (46) ausgebildet ist.

5. Rückschlagventil nach Anspruch 4, **dadurch gekennzeichnet, dass** der Ventilteller (46) einen Dichtring (50) aufweist.

6. Rückschlagventil nach einem der Ansprüche 1 bis 5, **dadurch gekennzeichnet, dass** der Ventilschaft (20) einen ersten Abschnitt (56), der in einer ersten Führungsöffnung (42) des Ventilkörpers (10) geführt ist und sich durch die Ausgangsöffnung (18) hindurch erstreckt, und einen zweiten Abschnitt (54) aufweist, der auf einer dem ersten Abschnitt (56) des Ventilschafts (20) gegenüberliegenden Seite der Ventilfläche (52) angeordnet ist und der in einer zweiten Führungsöffnung (30) des Ventilkörpers (10) geführt ist.

7. Rückschlagventil nach Anspruch 6, **dadurch gekennzeichnet, dass** der erste Abschnitt (56) des Ventilschafts (20) einen geringeren Durchmesser aufweist als die erste Führungsöffnung (42), so dass er in die zweite Offenstellung verkippt werden kann.

8. Rückschlagventil nach Anspruch 6 oder 7, **dadurch gekennzeichnet, dass** der Anschlag (60) des Ventilglieds (44) am zweiten Abschnitt (54) des Ventilschafts (20) ausgebildet ist und der Anschlag (62) des Ventilkörpers (10) an der zweiten Führungsöffnung.

9. Rückschlagventil nach einem der Ansprüche 1 bis 8, **dadurch gekennzeichnet, dass** der Anschlag (60) des Ventilglieds (44) eine Stufe im Durchmesser des Ventilschafts (20) ist.

10. Rückschlagventil nach einem der Ansprüche 1 bis 9, **dadurch gekennzeichnet, dass** der Griffabschnitt (22) eine Riffelung (24) aufweist.

11. Zapfpistole mit einem Rückschlagventil nach einem der Ansprüche 1 bis 10.

12. Milchwagen mit einer Dosiereinrichtung und einer Einrichtung zum Abgeben der Milch, die ein Rückschlagventil nach einem der Ansprüche 1 bis 11 aufweist.

## Claims

1. A non-return valve for pumpable animal feed, with
• a valve body (10), which comprises an entrance opening (16), an exit opening (18) and a valve seat (36),
• a valve member (44), which has a valve face (52) and a valve rod (20) which is guided so as to be movable in a longitudinal direction, and
• a spring (68), which loads the valve member (44) towards a closed position by a spring force, in which the valve face (52) bears against the valve seat (36),
• wherein the valve member (44) can be moved into a first open position against the spring force by animal feed that is to be pumped through the non-return valve, in which first open position the valve face (52) is situated in a first distance from the valve seat (36), **characterised in that**
• a stop (60) is formed on the valve member (44), which is supported on a stop (62) of the valve body (10) in a second open position of the valve member (44), and
• the valve rod (20) projects towards the outside through the exit opening (18) of the valve body (10) and has a grip portion (22) there, on which the valve rod (20) can be grasped in order to bring the valve member (44) into the second open position.

2. The non-return valve according to claim 1, **characterised in that** in the second open position, the valve surface (52) is in a second distance from the valve seat (36) that is greater than the first distance.

3. A non-return valve according to claim 1 or 2, **characterised in that** in the second open position, a longitudinal axis (64) of the valve rod (20) is arranged so as to be inclined with respect to its orientation in the closed position.

4. A non-return valve according to any one of claims 1 to 3, **characterised in that** the valve face (52) is formed on a valve head (46).

5. The non-return valve according to claim 4, **characterised in that** the valve head (46) comprises a sealing ring (50).

6. A non-return valve according to any one of claims 1 to 5, **characterised in that** the valve rod (20) comprises a first portion (56), which is guided in a first guide hole (42) of the valve body (10) and extends across the exit opening (18), and a second portion (54), which is arranged on a side of the valve face (52) opposite to the first portion (56) of the valve rod (20) and which is guided in a second guide hole (30) of the valve body (10).

7. The non-return valve according to claim 6, **characterised in that** the first portion (56) of the valve rod (20) has a smaller diameter than the first guide hole (42), so that it can be tilted into the second open position.

8. A non-return valve according to claim 6 or 7, **characterised in that** the stop (60) of the valve member (44) is formed on the second portion (54) of the valve rod (20), and the stop (62) of the valve body (10) on the second guide hole.

9. A non-return valve according to any one of claims 1 to 8, **characterised in that** the stop (60) of the valve member (44) is a step in the diameter of the valve rod (20).

10. A non-return valve according to any one of claims 1 to 9, **characterised in that** the grip portion (22) has a fluting (24).

11. A dispenser nozzle with a non-return valve according to any one of claims 1 to 10.

12. A milk car with a metering equipment and an equipment for dispensing the milk, which comprises a non-return valve according to any one of claims 1 to 11.

## Revendications

1. Clapet anti-retour pour alimentation pour animaux pompable, avec
• un corps de clapet (10), qui a une ouverture d'entrée (16), une ouverture de sortie (18) et un siège de soupape (36),
• un élément de soupape (44), qui a une surface de soupape (52) et une tige de soupape (20) qui est guidée dans une direction longitudinale de façon coulissante, et
• un ressort (68), qui repousse l'élément de soupape (44) par une force de ressort vers une position de fermeture, dans laquelle la surface de soupape (52) s'applique contre le siège de soupape (36),
• dans lequel l'élément de soupape (44), contre la force de ressort, est décalable vers une première position d'ouverture par l'alimentation pour animaux qu'on veut pomper à travers le clapet anti-retour, ladite première position d'ouverture de la surface de soupape (52) étant située en un premier écart du siège de soupape (36), **caractérisé en ce que**
• une butée (60) est formée sur l'élément de soupape (44), et est supportée sur une butée (62) du corps de clapet (10) dans une deuxième position d'ouverture de l'élément de soupape (44), et
• la tige de soupape (20) déborde vers l'extérieur à travers l'ouverture de sortie (18) du corps de clapet (10) et y a une portion de poignée (22), dans laquelle la tige de soupape (20) peut être saisie afin de mettre l'élément de soupape (44) dans la deuxième position d'ouverture.

2. Clapet anti-retour selon la revendication 1, **caractérisé en ce que** dans la deuxième position d'ouverture, la surface de soupape (52) est dans un deuxième écart du siège de soupape (36) qui est plus grand que le premier écart.

3. Clapet anti-retour selon la revendication 1 ou 2, **caractérisé en ce que** dans la deuxième position d'ouverture, un axe longitudinal (64) de la tige de soupape (20) est arrangé de sorte qu'il est incliné par rapport à son orientation dans la dans la position de fermeture.

4. Clapet anti-retour selon l'une quelconque des revendications 1 à 3, **caractérisé en ce que** la surface de soupape (52) est formée sur une tête de soupape (46).

5. Clapet anti-retour selon la revendication 4, **caractérisé en ce que** la tête de soupape (46) comporte une bague d'étanchéité (50).

6. Clapet anti-retour selon l'une quelconque des revendications 1 à 5, **caractérisé en ce que** la tige de soupape (20) comporte une première portion (56), qui est guidée dans un premier trou de guidage (42) du corps de clapet (10) et s'étend à travers l'ouverture de sortie (18), et une deuxième portion (54), qui est arrangée sur un côté de la surface de soupape (52) vis-vis de la première portion (56) de la tige de soupape (20) et est guidée dans un deuxième trou de guidage (30) du corps de clapet (10).

7. Clapet anti-retour selon la revendication 6, **caractérisé en ce que** la première portion (56) de la tige de soupape (20) a un diamètre moins grand que le premier trou de guidage (42), de sorte qu'elle peut être basculée dans la deuxième position d'ouverture.

8. Clapet anti-retour selon la revendication 6 ou 7, **caractérisé en ce que** la butée (60) de l'élément de soupape (44) est formée sur la deuxième portion (54) de la tige de soupape (20), et la butée (62) du corps de clapet (10) sur le deuxième trou de guidage.

9. Clapet anti-retour selon l'une quelconque des revendications 1 à 8, **caractérisé en ce que** la butée (60) de l'élément de soupape (44) est un gradin dans le diamètre de la tige de soupape (20).

10. Clapet anti-retour selon l'une quelconque des revendications 1 à 9, **caractérisé en ce que** la portion de poignée (22) a une ondulation (24).

11. Pistolet de remplissage avec un clapet anti-retour selon l'une quelconque des revendications 1 à 10.

12. Charrette de lait avec un dispositif de dosage et un dispositif pour émettre du lait qui comporte un clapet anti-retour selon l'une quelconque des revendications 1 à 11.
